# EUROPEAN PATENT APPLICATION

(11) **EP 4 417 044 A1**
(43) Date of publication of application: **21.08.2024**
(21) Application number: 22880456.3
(22) Date of filing: 01.09.2022
(51) Int. Cl.: A01K 27/00

(54) **COVER FOR COLLARS PROVIDED WITH ANTIPARASITIC MEANS**

(30) Priority: 14.10.2021 ES 202132016 U
(71) Applicant: C&D Proyectos XXI, S.L., 28221 Majadahonda (ES)
(72) Inventor: GARCIA SANCHEZ, Luciano, 28221 MAJADAHONDA (MADRID) (ES)
(74) Representative: Espiell Gomez, Ignacio
(86) International application number: PCT/ES2022/070552
(87) International publication number: WO 2023/062257

(57) **Abstract**

Disclosed is a cover for collars that are provided with antiparasitic means, which is characterised in that it comprises an elongate tubular body (1) which allows an antiparasitic collar (2) to be inserted therein, such as to surround the external and internal face of the collar, and which is equipped with closure means (5) at the ends thereof allowing the ends to be fastened together once the collar has been inserted. The internal face (1a) of the elongate tubular body (1) of the cover is made of a material (3) provided with holes, and the external face (1b) is made of smooth material (4) without holes. Both the internal mesh face (3) and the smooth external face (4) are made from elastic material. The closure means (5) at the ends comprise clasps (51) located on the internal face (1a) of the tubular body, and a hook-and-loop connection (52) located on the external face (1b). The closure means (5) at the ends of the tubular body (1) also comprise a threaded connection (53), a clamp (54), a male-female connection (55), a hook-and-loop tab (56), and a buckle (57) provided on the opposite end. The cover further comprises an insertion accessory (12) that consists of a flat strip of plastic material with an end (12a) having a rounded edge, and a space or surface (6) for incorporating graphic elements.

## Description

### OBJECT OF THE INVENTION

The invention, as stated in the title of the present specification, relates to a cover for collars provided with antiparasitic means that contributes advantages and features to the function intended, which are described in detail further on.

The object of the present invention relates to a cover which is designed particularly for covering antiparasitic collars worn by some pets, the purpose of which is to provide means to prevent the direct contact of people with said collars once they are placed on the animal, without reducing the antiparasitic protective effect for which the collars are intended.

### FIELD OF APPLICATION OF THE INVENTION

The field of application of the present invention is comprised in the sector of the industry dedicated to the manufacture of pet accessories and products, focusing particularly in the field of accessories for collars provided with antiparasitic means.

### BACKGROUND OF THE INVENTION

Today, companion animals, such as dogs and cats, usually wear collars provided with antiparasitic means in order to prevent them from contracting parasites that may be detrimental to their health, and to the health of their owners.

These antiparasitic collars contain a series of compounds that are toxic to humans.

This, along with the fact that pet owners and children would frequently pet and touch their animals, means that they often come into direct contact with collars of this type.

Furthermore, children often put their hands in their mouth, so they would be ingesting these toxic components directly, which are detrimental to their health and may cause allergies.

Therefore, the purpose of the present invention is to provide practical means for solving the problems derived from the factors and circumstances described above through the proposed cover.

Additionally, the present invention makes it difficult for the animal to lose its collar, for example, while playing or scratching the collar. Lastly, the present invention improves the aesthetic of the antiparasitic collars which are usually in a neutral colour.

### DESCRIPTION OF THE INVENTION

The cover for collars provided with antiparasitic means proposed by the invention is configured as the ideal solution to the aforementioned objective, the characterising details that make it possible and that distinguish it being conveniently included in the final claims that accompany this description.

The cover allows preventing a child or adult from direct contact with the antiparasitic collars that companion animals generally wear to prevent them from contracting parasites.

To that end, the cover essentially comprises a flexible elongate body with a tubular configuration which allows the collar to be inserted therein such as to surround the external and internal face of the collar, having at the ends thereof closure means envisaged for ensuring a correct position of the cover with respect to the collar, preventing the collar from moving or from being incorrectly placed with the movement of the animal.

Furthermore, in a preferred embodiment, at least the internal face of said elongate tubular body is manufactured from a material provided with holes, for example a mesh, so as to ensure that the internal part of the collar remains in contact with the animal, causing the emission of the antiparasitic means of the collar and thereby the suitable maintenance of the protective function, while on the external face, the tubular body is manufactured from a smooth or closed material, without holes, preferably a textile material, preventing a child or adult from being able to come into direct contact with the collar, which may be detrimental to their health, since the collar contains substances that are toxic to humans.

Preferably, both the internal face and the external face of the tubular body are made of an elastic material so that the tubular body can be adapted to the different lengths and widths of the antiparasitic collars, since these collars are manufactured in different sizes for different pet sizes.

Moreover and to facilitate the operation of inserting the collar inside the tubular body made of flexible and elastic fabric which constitutes the cover, preventing the need to handle it excessively in order to perform said insertion, there has been envisaged the existence an accessory element which, by consisting of a flat strip of plastic material sized to be fitted inside the tubular body, projecting from both ends, allows previously stretching and stiffening said tubular body, facilitating the insertion of the collar through one end thereof.

As is known, collars with antiparasitic means are manufactured from a semi-flexible material that adopts a curved shape having a notched end and another end provided with a buckle suitable for inserting the notched end therethrough, such that said notching locks into said buckle. The problem is that the curved shape of the collar and the existence of said notching complicate the insertion of the collar into the tubular body of the cover, making it necessary to hold the collar during the insertion manoeuvre.

The aforementioned insertion accessory allows said operation to be performed much more quickly and easily, preventing spending more time than necessary in direct contact with the material of the collar.

In turn, in any case, although the closure means at the ends of the cover can be of different types, for example in the form of clasps, hooks and loops, clip type, with magnets, threaded type, in the form of a clamp or male-female connection, in a preferred embodiment, they are formed by the existence of a hook-and-loop tab at one end, provided on one side with soft matted fabric and on the other side with notched fabric such that they are fastened together, and with a buckle at the opposite end through which the mentioned tab is passed.

Finally, it should be noted that the cover preferably comprises a space or surface, for example, on the external face of the tubular body or of the closure means, suitable for incorporating embroidered, printed, silkscreen printed, and/or engraved, graphic or alphanumerical elements with the name of the pet and/or the trademark or logotype of the company manufacturing or selling the cover.

### DESCRIPTION OF THE DRAWINGS

To complete the description, and for the purpose of helping to make the features of the invention more readily understandable, this description is accompanied by a set of drawings constituting an integral part of the same, which by way of illustration and not limitation represents the following:

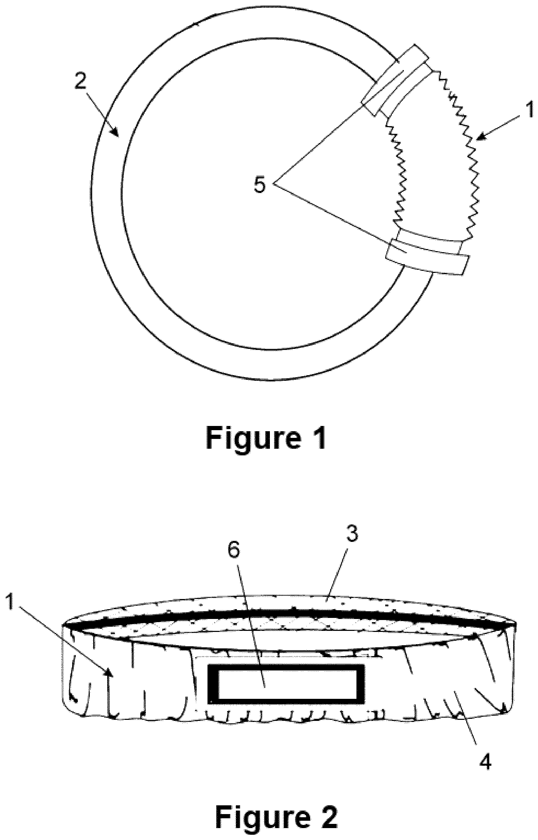

Figure 1 shows a schematic plan view of an example of the cover according to the invention in the phase of being placed in an antiparasitic collar;
Figure 2 shows a perspective view of the cover of the invention once placed in the collar, in an example thereof provided with a space on which any type of motif or logotype can be printed, silkscreen printed, or embroidered;

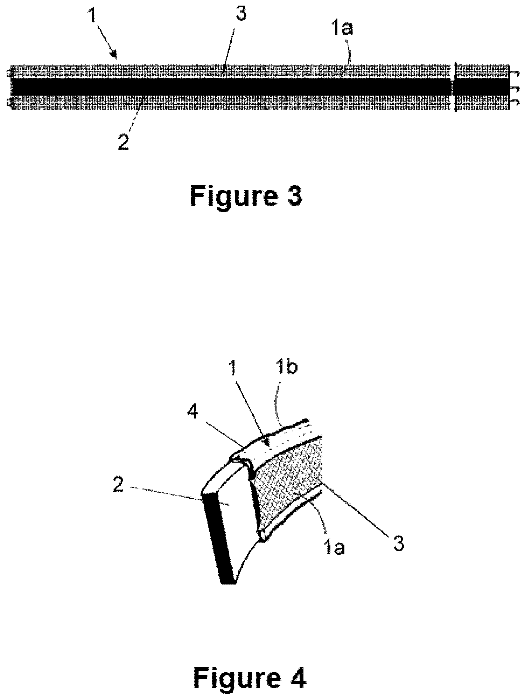

Figure 3 shows a plan view of an example of the cover depicted in an extended position and with the collar placed therein, in an example thereof made with a grid leaving the antiparasitic collar in contact with the animal;
Figure 4 shows a cross-section view of the cover and the collar, according to the example shown in Figure 3;
Figures number 5-A, 5-B, and 5-C show different perspective views of an example of the cover according to the invention with closure means made up of a connection by means of hook-and-loop located on the external face, and a connection by means of clasps located on the internal face of the cover;
Figure 6 shows a perspective view of another embodiment of the cover of the invention, in this case having a thread as closure means;
Figure 7 shows a perspective view of another example of the cover of the invention the closure means of which are a clamp;
Figure 8 shows a perspective view of another example of the cover of the invention in which the closure means are a male-female connection;
Figure 9 shows a perspective view of another example of the cover of the invention in which the closure means are a tab and a buckle;
Figures number 10-A and 10-B show respective plan view and view in an extended position, on the external and internal face respectively, of the example of the cover shown in Figure 9;
Figure 11 shows an extended plan view of the example of the cover shown in Figures 9 and 10-A, 10-B along with an example of the insertion accessory; and
Figure 12 shows an extended plan view of the cover with the insertion accessory incorporated therein to facilitate the placement of the cover on the collar.

### PREFERRED EMBODIMENT OF THE INVENTION

In view of the aforementioned figures, and in accordance with the adopted numbering, one may observe therein several non-limiting exemplary embodiments of the cover for collars provided with antiparasitic means of the invention, comprising what is described in detail below.

Therefore, as observed in said figures, the cover of the invention essentially comprises an elongate tubular body (1), having a configuration such that it allows an antiparasitic collar (2) to be inserted therein, such as to surround the external and internal face of the collar, and which is equipped with closure means (5) at the ends thereof which allow said ends to be fastened together once the collar (2) has been inserted.

In a preferred embodiment, the internal face (1a) of the elongate tubular body (1) of the cover is made of a material provided with holes (3), preferably a mesh (3), and the external face (1b) is made of a material without holes (4), preferably a smooth textile material.

Preferably, both the internal mesh face (3) and the smooth external face (4) of the tubular body (1) are manufactured from elastic material. Preferably, both fabric materials are connected together by means of longitudinal seams.

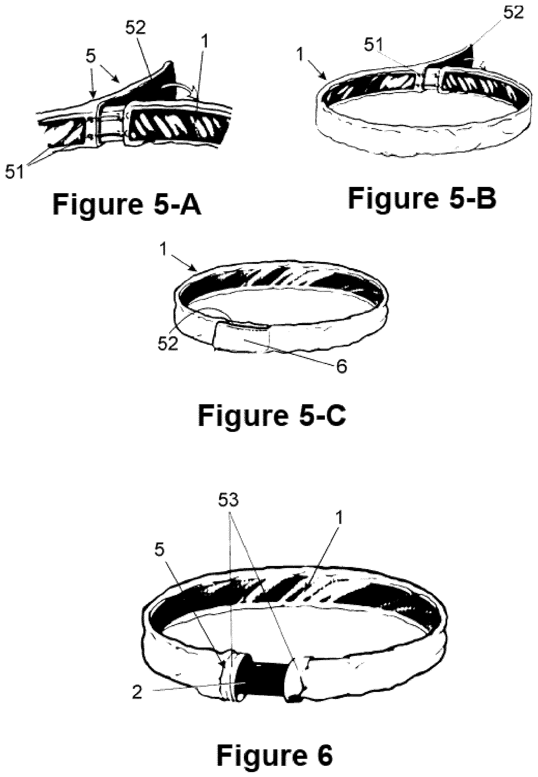

Considering Figures 5-A, 5-B, and 5-C, in a specific embodiment, the closure means (5) at the ends of the tubular body (1) of the cover comprise clasps (51) located on the internal face (1a) of the tubular body and a hook-and-loop connection (52) located on the external face (1b).

Considering Figure 6 it can be seen how, in another embodiment, the closure means (5) consist of a threaded connection (53).

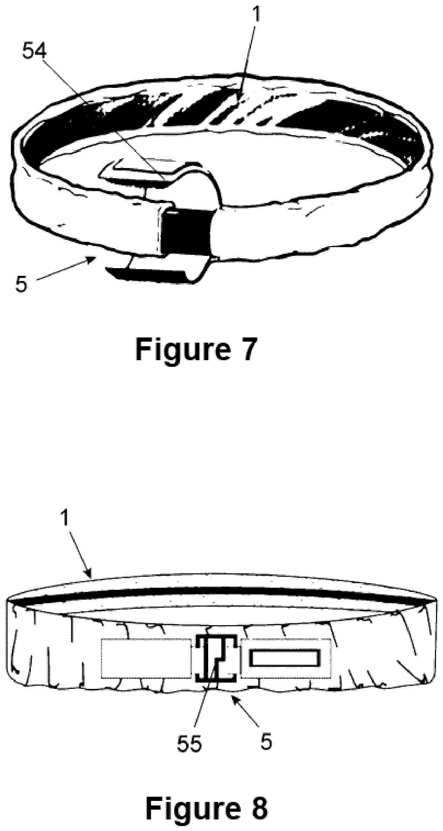

Considering Figure 7, another embodiment of the cover in which the closure means (5) at the ends of the tubular body (1) consist of a clamp (54) can be seen.

Considering Figure 8, yet another embodiment option of the closure means (5), in this case by way of a male-female connection (55), can be seen.

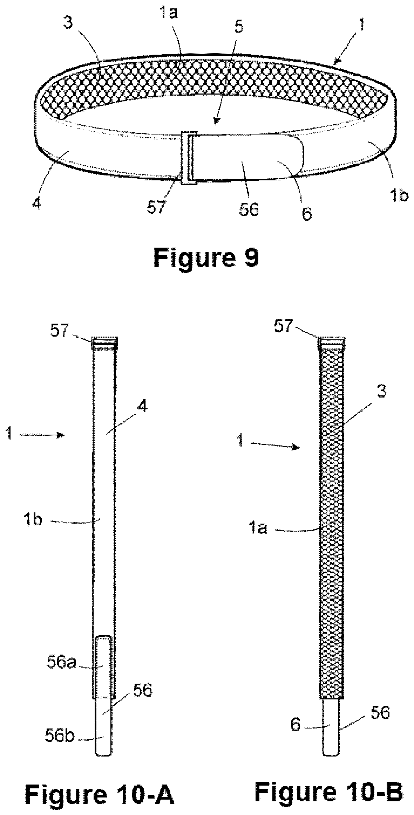

Furthermore, considering Figures 9 to 12, it can be seen how, in another embodiment, the closure means (5) at the ends of the tubular body (1) comprise a hook-and-loop tab (56) formed by a segment of smooth matted fabric (56a) and a segment of notched fabric (56b), suitable to be inserted into a buckle (57) provided on the opposite end of the tubular body (1) such that the tab fastens both ends together when it is folded on itself.

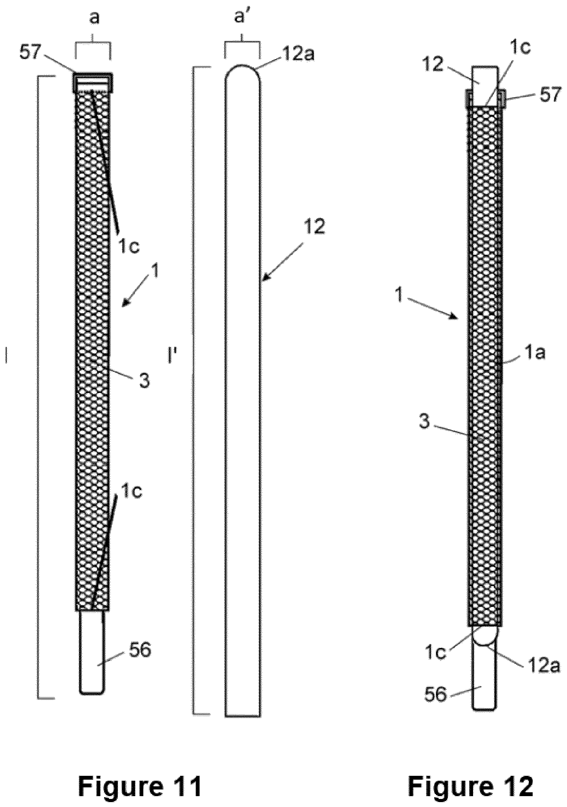

In any case, in a preferred embodiment, the cover of the invention comprises an insertion accessory (12) consisting of a flat strip of plastic material which is sized, as seen in Figures 11 and 12, to be fitted inside the tubular body (1) projecting from both ends, thereby allowing said tubular body (1) to be stretched and stiffened prior to the insertion of the collar (2) in order to facilitate said insertion.

Preferably, said strip forming the insertion accessory (12) has at least one end (12a) having a rounded edge to facilitate the introduction thereof into the tubular body (1) of the cover.

In a preferred embodiment, the strip of the insertion accessory (12) has a length (I') of 60 cm and a width (a') of 1.4 cm, such that it is narrower and considerably longer than the tubular body (1) of the cover, the length (I) of which is about 31 cm and its width (a) is 2.2 cm. Logically, the measurements of the tubular body (1) and of the insertion accessory (12) vary depending on the size of the collar (2).

Preferably, to make it easier to introduce said insertion accessory (12) and, in any case, to facilitate the insertion of the collar (2), at the ends of the tubular body (1), prior to the placement of the closure means (5), the mesh (3) provided on the internal face (1a) has respective polyester trims (1c) which define the openings of said tubular body (1) in order to facilitate said introduction.

Lastly, the tubular body (1) preferably comprises a smooth space or surface (6) on the external face (1a) of said tubular body or the closure means (5), suitable for incorporating embroidered, printed, silkscreen printed, and/or engraved graphic elements or logotypes.

Having sufficiently described the nature of the present invention, as well as the ways in which it may be implemented, it is not considered necessary to elaborate on the explanation thereof in order for a person skilled in the art to understand the scope of the invention and the advantages derived therefrom.

## Claims

1. A cover for collars provided with antiparasitic means, **characterised in that** it comprises an elongate tubular body (1), having a configuration such that it allows an antiparasitic collar (2) to be inserted therein, such as to surround the external and internal face of the collar, and which is equipped with closure means (5) at the ends thereof allowing the ends to be fastened together once the collar has been inserted.

2. The cover for collars provided with antiparasitic means according to claim 1, **characterised in that** the internal face (1a) of the elongate tubular body (1) of the cover is made of a material (3) provided with holes, and the external face (1b) is made of smooth material (4), without holes.

3. The cover for collars provided with antiparasitic means according to claim 2, **characterised in that** the internal face (1a) of the tubular body (1) is made of a mesh (3) and the external face (1b) is a smooth textile material (4).

4. The cover for collars provided with antiparasitic means according to claim 2 or 3, **characterised in that** both the internal mesh face (3) and the smooth external face (4) of the tubular body (1) are made from elastic material.

5. The cover for collars provided with antiparasitic means according to any of claims 1 to 4, **characterised in that** the closure means (5) at the ends of the tubular body (1) comprise clasps (51) located on the internal face (1a) of the tubular body, and a hook-and-loop connection (52) located on the external face (1b).

6. The cover for collars provided with antiparasitic means according to any of claims 1 to 4, **characterised in that** the closure means (5) at the ends of the tubular body (1) comprise a threaded connection (53).

7. The cover for collars provided with antiparasitic means according to any of claims 1 to 4, **characterised in that** the closure means (5) at the ends of the tubular body (1) comprise a clamp (54).

8. The cover for collars provided with antiparasitic means according to any of claims 1 to 4, **characterised in that** the closure means (5) at the ends of the tubular body (1) comprise a male-female connection (55).

9. The cover for collars provided with antiparasitic means according to any of claims 1 to 4, **characterised in that** the closure means (5) at the ends of the tubular body (1) comprise a hook-and-loop tab (56) and a buckle (57) provided on the opposite end.

10. The cover for collars provided with antiparasitic means according to any of the preceding claims, **characterised in that** it comprises an insertion accessory (12) for stretching and stiffening the tubular body (1) prior to the insertion of the collar (2) and for facilitating said insertion.

11. The cover for collars provided with antiparasitic means according to claim 10, **characterised in that** the insertion accessory (12) consists of a flat strip of plastic material sized to be fitted inside the tubular body (1), projecting from both ends.

12. The cover for collars provided with antiparasitic means according to claim 11, **characterised in that** the strip forming the insertion accessory (12) has at least one end (12a) having a rounded edge.

13. The cover for collars provided with antiparasitic means according to any of the preceding claims, **characterised in that** the openings at the ends of the tubular body (1) have polyester trims (1c).

14. The cover for collars provided with antiparasitic means according to any of the preceding claims, **characterised in that** the tubular body (1) comprises a space or surface (6) for incorporating embroidered, printed, silkscreen printed, and/or engraved graphic elements or logotypes.
